# EUROPEAN PATENT APPLICATION

(11) **EP 4 301 090 A1**
(43) Date of publication of application: **03.01.2024**
(21) Application number: 22189044.5
(22) Date of filing: 05.08.2022
(51) Int. Cl.: H05B 3/26, F24D 13/02

(54) **NATURAL STONE PANEL WITH AN INTEGRATED HEATING SYSTEM AND MANUFACTURING METHOD THEREOF**

(30) Priority: 28.06.2022 PT 2022118071; 21.07.2022 PT 2022118119
(71) Applicant: CENTITVC - Centro de Nanotecnologia e Materiais Tecnicos, Funcionais e Inteligentes, 4760-034 Vila Nova de Famalicão (PT); Solancis - Sociedade Exploradora de Pedreiras S.A., 2475-016 Benedita (PT)
(72) Inventor: OLIVEIRA DA SILVA, José Fernando, 4760-034 VILA NOVA DE FAMALICÃO (PT); FERNANDES DA SILVA ANDRADE LEITE,André Filipee, 4760-034 VILA NOVA DE FAMALICÃO (PT); RODRIGUES CAMPANHÃ, Daniela Cristina, 4760-034 VILA NOVA DE FAMALICÃO (PT); COSTA DELGADO, Samuel, 2475-029 BENEDITA (PT); PAULINO DA SILVA, Nelson Manuel, 2480-055 CALVARIA DE CIMA (PT)
(74) Representative: Patentree

(57) **Abstract**

Natural stone panel with an integrated heating system for placing into direct contact with ground or wall, creating a radiant heating floor or facade, comprising: a support natural stone tile; a printed heating layer on said tile, comprising a plurality of heating tracks and a plurality of distributing tracks; an insulating layer for providing thermal and electrical insulation between the printed heating layer and the ground or wall; wherein the heating tracks have been printed using a first ink, and the distributing tracks have been printed using a second ink, wherein electrical conductivity of the first ink is lower than electrical conductivity of the second ink; wherein the printed heating layer has two distributing tracks for each heating track perpendicularly positioned in relation to said two distributing tracks, for forming bus bars by said distributing tracks.

## Description

### Technical domain

The present invention relates to a natural stone panel with heating capabilities, for application in radiant floor or wall heating. In particular, it relates to a stone panel containing warming elements on its back, specifically, a printed heater composed of printed conductive and/or resistive inks, that produce radiant heat when an electrical current is applied, making use of the Joule Effect. The printed heater can be fully printed on the back or have only the resistive inks printed on top of a conductive metallic element previously inserted on the stone tile.

### Background

The heating systems found that are associated with natural stone structures, base their operation on different technologies, such as a hydraulic system, consisting of a natural stone heater that contains a stone panel with a heating pipe system in contact with the stone, where the panel has a grooved or flat back face that defines the channels that receive the pipe system. Among the technologies applied is also the use of a multilayer structure with incorporates electrical and/or hydraulic systems to create an architectural material designed for wall cladding, able to withstand heat and humidity. It may also contain an integrated electric resistance heater embedded in the material.

Other types of devices have also been found which make use of a multi-layered structure, these being: a binding membrane with water permeability, a layer with electrically conductive paint capable of functioning as a radiant heater, and finally an adhesive layer for adhering the layer with the conductive paint to the binding membrane. This heating system can then be incorporated into a floor, for example, acting as flooring. Another type of device was also found, which uses the same technology as the one presented above, but in a more simplified form. In this device there are only three layers: the upper one is the natural stone which can be used as flooring or facades; the middle layer is the heating layer which is configured in such a way as to directly heat the upper layer; and the lower layer comprises a material which functions as a thermal insulator.

As for existing patents that describe similar systems to the ones proposed in this patent, the examples found are described next.

The first patent, EP1715275A3, describes a natural stone heater composed of a stone panel and a heating pipe system, with the pipe system being inserted on a groove or recess created on the rear face of the stone panel. The groove or recess can be formed by cutting or grinding and the pipe system can be composed of a single pipe or a grid of pipes.

The next patent, US20150024168A1, describes a material suitable for flooring or cladding walls, which is capable of withstanding heat and humidity and that can have an integrated electric resistance heater embedded in the material. The structure is composed of a top and bottom surface, a reinforcing layer bonded to the surface material's bottom surface or top surface, a resilient layer bonded to the reinforcing layer and a plastic base. The electrical heating elements are inserted between the architectural surface, made of wood or stone, and the resilient ecoboard or cement layer, in grooves present on both layers, made previously for the effect.

Another patent, DE4306790A1, describes a radiator that has a natural stone panel, made of marble, that is in contact with a metal or concrete panel warmed by an electric heater element. The heating panel is warmed by vapour condensed in a combination of short and long heating tubes, with the vapour being produced by the heating of a heat transfer fluid by the electric heater. A heat transfer material is applied between the stone front tile and the heating tile, in order to ensure even heating.

Finally, patent US8618445B2, describes a heating system that can be incorporated in a floor in conjunction with a substrate and a decorative floor surface, with the heating system being composed of a bonding membrane, including a water permeable lamina, and an ink-based radiant heater, bounded using a compatible adhesive. The described heating system can also be in the form of a multilayer panel having a bonding membrane, a plurality of electrically resistive strips printed on a first polymer sheet connected by electrically conductive buses, and electrical conductors extending from the buses to at least an edge of the panel.

These facts are described to illustrate the technical problem solved by the embodiments of the present document.

### General Description

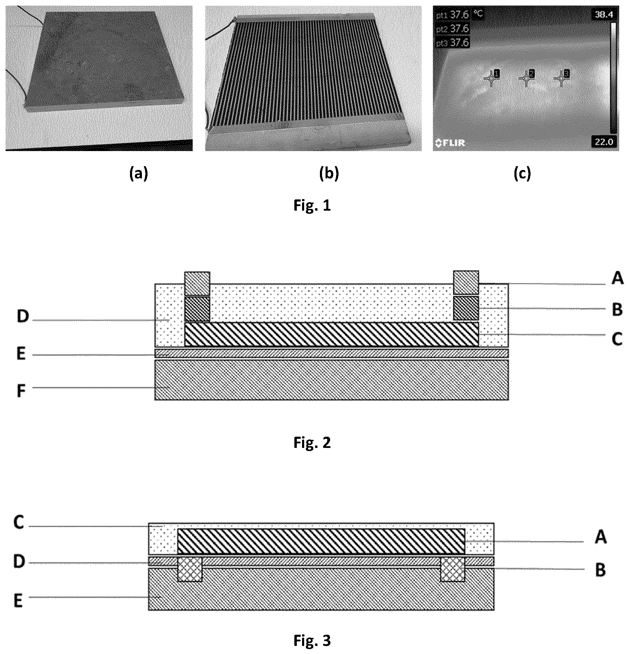

This disclosure proposes a natural stone panel with a heating system directly applied onto it, for the purpose of permitting its application as a radiant heating system for flooring orfacade applications. The details will be described with reference to Figures 1 to 3.

As illustrated in **Figure 1**, this natural stone panel according to an embodiment includes a limestone tile with printed heating, wherein (a) represents a top surface; (b) represents a bottom surface with printed heater; (c) represents a thermal view of activated heater.

This work was developed in the framework of INSTONE project, co-financed by the Operational Programme for Competitiveness and Internationalization (COMPETE 2020), under the PORTUGAL 2020 Partnership Agreement, through the European Regional Development Fund (ERDF).

This disclosure proposes a natural stone panel with an integrated heating system for placing as a radiant heating floor or tile into direct contact with ground or wall, comprising: a support stone panel or, interchangeably, a support stone tile; a printed heating layer on said tile (whether printed directly or indirectly on said tile), comprising a plurality of heating tracks and a plurality of distributing tracks; an insulating layer for providing thermal and electrical insulation between the printed heating layer and the ground or wall; wherein the heating tracks have been printed using a first ink, and the distributing tracks have been printed using a second ink, wherein electrical conductivity of the first ink is lower than electrical conductivity of the second ink; wherein the printed heating layer has two distributing tracks for each heating track perpendicularly positioned in relation to said two distributing tracks, for forming bus bars by said distributing tracks. In the context of the present disclosure, bus bars or distributing tracks are thus used interchangeably.

In an embodiment, the insulating layer for providing thermal and electrical insulation between the printed heating layer and the ground or wall, wherein the insulating layer is arranged to be applied to the ground or wall.

In an embodiment, the natural stone panel further comprises a polymeric layer for uniformizing a back surface of the support stone tile for receiving the printed heating layer and reducing tile porosity, wherein the printed heating layer is printed on said polymeric layer. In an embodiment, a polymeric layer for uniformizing a back surface of the support stone tile for reducing humidity ingress from a front face of the tile, thus reducing water risks to the electrical circuit, and also reducing conductive ink absorption, thus facilitating ink deposition and uniformity.

In an embodiment, the polymeric layer is a resin, in particular an epoxy resin.

In an embodiment, the resin is applied by dipping the back surface of the tile in said resin.

In an embodiment, the polymeric layer is a film.

In an embodiment, the film is a polyethylene terephthalate (PET), polyethylene terephthalate glycol-modified (PETG), and/or polyethylene naphthalate (PEN) film.

In an embodiment, the polymeric layer is electrically insulating.

In an embodiment, the insulating layer can be directly applied over the printed heating layer.

In an embodiment, the natural stone panel further comprises a printed touch-sensitive layer on said tile, comprising a plurality of circuit tracks arranged to detect touch events on the support stone tile.

In an embodiment, the support stone panel comprises grooves for receiving the distributing tracks.

In an embodiment, the heating tracks comprise a length equal to the distance between the bus bars.

In an embodiment, the distributing tracks comprise silver, copper, or other metallic elements, or combinations thereof.

In an embodiment, the heating tracks have been obtained by printing carbon paste or composite.

In an embodiment, a natural stone panel further comprises an outer insulating polymeric layer for to protecting and isolating the printed heating layer.

In an embodiment, the insulating polymeric layer is an outer layer for protecting and isolating the printed heating layer.

In an embodiment, the outer insulating layer comprises polyethylene terephthalate (PET), polyethylene terephthalate glycol-modified (PETG), polyethylene naphthalate (PEN), and/or polyimide.

In an embodiment, the outer insulating polymeric layer is thermally and electrically insulating.

In an embodiment, the outer insulating polymeric layer is a thermally and electrically insulating film.

In an embodiment, the support stone tile is a sedimentary rock, igneous rock, metamorphic rock, preferably a sedimentary rock, further preferably limestone, travertine, marble, granite, basalt, sandstone, gneiss, quartzite, slate, onyx or laterite, further preferably limestone. Along the disclosure, it is considered that a stone tile is a stone block or slab used for tiling.

In an embodiment, the bus bars comprise a width of at least 1 cm and a thickness of at least 20 microns, with a length equal to the length of the stone tile.

In an embodiment, the distributing tracks have a length less than 60 cm.

In an embodiment, the heating tracks is placed no more than 2.5 cm or 25 cm at an edge of the support stone tile.

In an embodiment, the width of the heating tracks is between 0.8 mm and 1.5 mm, with 0.2 mm to 0.5 mm between each consecutive heating track.

In an embodiment, the heating tracks comprises a thickness of at least 10 microns.

In an embodiment, the support stone panel of the natural stone panel comprises a porosity between 0,5% and 7%, preferably between 1% and 6%, measured using standard EN 1936:2006 - "Natural stone test methods - Determination of real density and apparent density, and of total and open porosity".

In an embodiment, the distributing tracks comprise materials with sheet resistivities comprised range between 10 mΩ/sq/mil and 20 mΩ/sq/mil. In an embodiment, the sheet resistivities of the heating tracks is comprised between 20 Ω/sq/mil and 30 Ω/sq/mil.

It is also disclosed a method for manufacturing a natural stone panel with an integrated heating system for placing as a radiant heating floor or façade into direct contact with ground or wall, said method comprising: providing a support stone tile; printing a printed heating layer on said tile, comprising a plurality of heating tracks; curing of the pattern and/or carbon film and/or carbon composite material at temperatures comprised between 100°C and 150°C, for 10 minutes to 20 minutes; printing a printed heating layer on said tile, comprising a plurality of distributing tracks; curing of the silver and/or copper and/or aluminium tracks at temperatures comprised between 100°C and 150°C, for 10 minutes to 20 minutes; applying an insulating layer for providing thermal and electrical insulation between the printed heating layer and the ground or wall; wherein the heating tracks have been printed using a first ink, and the distributing tracks have been printed using a second ink, wherein electrical conductivity of the first ink is lower than electrical conductivity of the second ink; wherein the printed heating layer has two distributing tracks for each heating track perpendicularly positioned in relation to said two distributing tracks, for forming bus bars by said distributing tracks.

In an embodiment, the curing after the printing is done in dryers/ovens with ventilation.

In an embodiment, the method for manufacturing a natural stone panel further comprises the step of gluing a copper conductive tape on top of the conductive tracks between the insulation layer.

In an embodiment, a plurality of copper wires is soldered to the copper tape and connected to a control circuit.

### Brief Description of the Figures

The following figures provide preferred embodiments for illustrating the disclosure and should not be seen as limiting the scope of invention.

**Fig 1****.** Illustrates a limestone tile with printed heating, wherein (a) represents a top surface; (b) represents a bottom surface with printed heater; (c) represents a thermal view of activated heater.

**Fig 2****.** Illustrates a schematic representation of the cross section of a stone panel with printed heater tracks and bus bars, wherein A) represents a copper tape; B) represents a bus bar; C) represents a heating track; D) represents an insulating layer; E) represents a support polymeric layer; F) represents a stone panel.

**Fig 3****.** Illustrates a schematic representation of the cross section of a stone panel with printed heater tracks and solid bus bars, wherein A) represents a heating track; B) represents a solid metallic bus bar; C) represents an insulating layer; D) represents a support polymeric layer; E) represents a stone panel.

### Detailed Description

The present disclosure refers to a natural stone panel with a heating system directly applied onto it, for the purpose of the permitting its application as a radiant heating system for flooring or façade applications.

In its most basic form, the final system can be composed of the support stone tile, a printed heating layer, an insulating layer and the control and power hardware.

To accommodate the heating layer and promote uniform heating, the stone element, e.g. limestone, should have a homogeneous distribution of mineral agglomerates and porosity, between 1% and 7%, measured using standard EN 1936:2006 - "Natural stone test methods - Determination of real density and apparent density, and of total and open porosity".

The heating layer can be directly printed on the stone back surface, but to prevent defects in the printed layers, due to, for example, pre-existing holes on the surface of the stone tile, a polymeric layer should be applied prior to the application of the printed layers, in order to fill in any hole or crack that might exist in the surface, which might then result in defects in the printed layers, as well as create a more uniform roughness, to prevent non-uniformity between, for example, the thickness of the printed tracks This polymeric layer can be applied under the form of a liquid coating, for example, of an epoxy resin, that then is cured to become rigid, filling in the pores and creating a uniform surface, or under the form of a polymeric membrane, of polyethylene terephthalate (PET), and/or polyethylene naphthalate (PEN), that is glued onto the surface, for the same purpose. The substrates must resist the curing temperature of the conductive inks, usually comprised between 100°C and 150°C with an exposure time at temperatures comprised between 10 minutes and 20 minutes.

In the case of the polymeric membrane, the same material can also be used as the insulating layer. This layer prevents the heating layer materials from coming into direct contact with the ground, which might damage it. Since this protection is made of a thermally and electrically insulating material, it prevents the heat from being lost down, thus increasing the system's efficiency.

In an embodiment, the printed heating system can be composed of tracks created by printing two inks of different conductivities, with the ink with low electrical conductivity, based, for example, or carbon elements, being used to create the heating tracks, and the ink with high electrical conductivity, based, for example, on silver, copper, or other metallic elements, being used to create the bus bars, responsible to distributing homogeneously the electrical current supplied.

The resistive carbon materials used are capable of being processed by screen printing technology, and/or rotogravure and/or inkjet printing. These types of materials are used due to its higher sheet resistivity, with values comprised between 10 Ω/sq/mil and 100 Ω/sq/mil, in order to enable a high efficiency of heating through Joule effect, but, at the same time, the high resistivity causes a loss of electrical voltage when applied to tracks with large dimensions. For this reason, it is needed to use materials with electrical conductivity for the bus bars, be it silver, copper, or other. These conductive materials present low sheet resistivity, with values comprised between 5 mΩ/sq/mil and 40 mΩ/sq/mil and, therefore, do not dissipate too much energy by Joule effect. Through this configuration the bus bars transport electric current uniformly to the various terminals of the carbon tracks, thus permitting uniform release of thermal energy throughout the various tracks of the resistive material used.

Regarding the design of the heating circuit, for the present invention, it is composed of two silver tracks, denominated bus bars, and perpendicular tracks composed of carbon material. In this geometry the electric voltage is applied to the bus bars, with no significant heating of the conductive material used, because of its low electrical resistivity. The electric current flows between the two bus bars and through the carbon tracks that, as due to having higher electrical resistance, generate a higher amount of heating energy through the Joule effect.

The printed bus bars should have a width of at least 1 cm and a thickness of at least 20 microns, with a length equal to the length of the stone tile, but no more than 60 cm. As for the carbon heating tracks, they should have a length equal to the distance between the bus bars, that should be placed at the edges of the stone tile, but no more than 2.5 cm or 25 cm. For distances bigger, it is necessary to introduce a bus bar at a halfway point between the original bus bars. The width of the heating tracks should be between 0.8 mm and 1.5 mm, with 0.2 mm to 0.5 mm between each consecutive heating track, and a thickness of at least 10 microns.

The two materials that compose the heating circuits can be printed by any technique that allows the direct deposition of the necessary inks, taking into accounting their rheological properties, and according to a predetermined design. These techniques can be, for example, screen printing and/or rotogravure and/or inkjet printing, being the chosen printing technology, tailored to the inks available.

When the technology selected is screen printing, the ink is forced to pass to the substrate through a frame which is perforated with the pattern that one wants to print out, this being constituted by polyester or metal. The steps for printing a heating system through screen printing on a stone tile are as follows:
1. Printing of the carbon paste and/or carbon composite material to create the resistive tracks on the stone substrate or support membrane.
2. Thermal curing of the pattern and/or carbon film and/or carbon composite material at temperatures comprised between 100°C and 150°C, for 10 minutes to 20 minutes.
3. Printing silver and/or copper and/or aluminum tracks on the stone substrate to create the bus bars.
4. Thermal curing of the silver and/or copper and/or aluminum tracks at temperatures comprised between 100°C and 150°C, for 10 minutes to 20 minutes.

The dimensions of the printed circuits, and the tracks that compose them, are defined by the frame used to make the printing. In this technique, the amount of material which is printed is defined by the characteristics of the frame and the processing parameters used. The curing of the material after the printing is done in dryers/ovens with ventilation.

To allow the connection of the printed heating circuit to the control and power hardware, a copper conductive tape should be glued on top of the conductive tracks, but below the insulation layer. The copper tape must have a width equal or higher than the width of the bus bars. Copper wires are then soldered to the copper tape and to connected to the control PCB.

In another embodiment of the proposed disclosure, the bus bars are applied before the heating tracks, under the form of metallic solid elements, for example, of steel or copper, that are inserted on grooves created on the stone tile. A polymeric filling is then applied to prevent any gaps between the metallic element and the nearest edge of the stone panel, which would create defects on the heating tracks that are then printed on top of the stone panel and metallic solid element. The soldering of the copper wires can be done directly to the metallic element, without requiring the application of the copper tape.

The electronic control hardware is constituted by a power supply for the circuits, temperature sensors for monitoring the stone panel temperature, a control PCB and an encapsulating material for electrical and mechanical protection.

The user set temperature is achieved by controlling the on-off cycles of the heating circuit, by means of the control PCB, that monitors the temperature of the stone panel and regulates the current intensity and/or time of application of electrical voltage to the heating circuit accordingly. The dimensioning of the heating circuits is developed, based on the electrical resistivity of the materials used and the voltages that will be applied, with the heating structure here described, being dimensioned to operate powered by 230V.

Ultimately, the temperature obtained on the surface of the printed circuits depends on the electric voltage applied to the terminals thereof, the dimensions of the printed circuit board and its respective lines, the thickness of the printed films, the substrate in which is printed, the materials used in its processing, the type of association (series or parallel) between the various circuit boards and the environment in which the heating circuit is embedded and/or laminated and/or printed.

Regarding the setting of the heating circuit set temperature by the user, in the case of the present invention, it is done by a touch sensing printed system, that can be present in the same stone panel as the heating system, or in an associated one. In the case of the present invention, the touch sensing structures are applied through the application of conductive inks using a printing technology, namely screen printing. All the printed elements are printed resorting to a conductive silver ink (DuPont 5025), with a sheet resistance range between 10 mΩ/sq/mil and 20 mΩ/sq/mil, through a screenprinting process over a 90×40 mesh (90 yarns/cm and 40 µm yarn diameter).

After the layering of the ink over the surface, the set is curated in a thermal oven at approximated temperature of 110°C for approximately 15 minutes. In the end, a sensory device comprising a thickness between 100 µm and 150 µm, with capacitances in the range of 10 pF and a minimum 10% capacitance variation when activated is applied on the surface of the stone element.

To prevent the incorrect activation of the touch sensing system, a conductive silver mesh, applied in the same way as the sensing electrode, and using the same ink, was applied around the sensing elements, in order to allow the shielding of the system and protection against electromagnetic interference.

For the sensing system, the place where the sensing structures are applied, should not have a thickness greater than the separation between the sensing electrode, responsible for creating the electric field used for the detection of the approach or touch on the stone surface by the human finger, and the shield silver mesh.

The term "comprising" whenever used in this document is intended to indicate the presence of stated features, integers, steps, components, but not to preclude the presence or addition of one or more other features, integers, steps, components or groups thereof.

The disclosure should not be seen in any way restricted to the embodiments described and a person with ordinary skill in the art will foresee many possibilities to modifications thereof. The above-described embodiments are combinable. The following claims further set out particular embodiments of the disclosure.

## Claims

1. Natural stone panel with an integrated heating system for placing as a radiant heating flooring or facade, in direct contact with ground or wall, comprising:
a support natural stone tile;
a printed heating layer on said tile, comprising a plurality of heating tracks and a plurality of distributing tracks;
an insulating layer for providing thermal and electrical insulation between the printed heating layer and the ground or wall, wherein the insulating layer is arranged to be applied to the ground or wall;
wherein the heating tracks have been printed using a first ink, and the distributing tracks have been printed using a second ink, wherein electrical conductivity of the first ink is lower than electrical conductivity of the second ink;
wherein the printed heating layer has two distributing tracks for each heating track perpendicularly positioned in relation to said two distributing tracks, for forming bus bars by said distributing tracks.

2. Natural stone panel according to the preceding claim further comprising a polymeric layer for uniformizing a back surface of the support natural stone tile for receiving the printed heating layer and reducing panel porosity, wherein the printed heating layer is printed on said polymeric layer.

3. Natural stone panel according to the preceding claim wherein the polymeric layer is a resin, in particular an epoxy resin.

4. Natural stone panel according to the preceding claim wherein the resin is applied by dipping the back surface of the support natural stone tile in said resin.

5. Natural stone panel according to claim 2, wherein the polymeric layer is a polyethylene terephthalate (PET), polyethylene terephthalate glycol-modified (PETG), and/or polyethylene naphthalate (PEN) film.

6. Natural stone panel according to any of the claims 2-5 wherein the polymeric layer is electrically insulating.

7. Natural stone panel according to anyone of the previous claims, wherein the insulating layer is directly applied over the printed heating layer.

8. Natural stone panel according to any one of the previous claims, further comprising a printed touch-sensitive layer on said tile, comprising a plurality of circuit tracks arranged to detect touch events on the support stone tile.

9. Natural stone panel according to any one of the previous claims wherein the support stone panel comprises grooves for receiving the distributing tracks.

10. Natural stone panel according to any of the previous claims wherein the distributing tracks comprise silver, copper, or other metallic elements, or combinations thereof, and the heating tracks have been obtained by printing carbon paste or composite.

11. Natural stone panel according to any of the previous claims wherein the insulating polymeric layer is an outer insulating polymeric layer for protecting and isolating the printed heating layer.

12. Natural stone panel according to the preceding claim wherein the outer insulating polymeric layer is a thermally and electrically insulating film.

13. Natural stone panel according to any of the previous claim wherein the bus bars have a width of at least 1 cm and a thickness of at least 20 microns, with a length equal to the length of the stone tile, wherein the width of the heating tracks is between 0.8 mm and 1.5 mm, with 0.2 mm to 0.5 mm between each consecutive heating track.

14. Natural stone panel according to any of the previous claim wherein the heating tracks have a thickness of at least 10 microns.

15. Method for manufacturing a natural stone panel with an integrated heating system for placing as a radiant heating flooring or facade, in direct contact with ground or wall, said method comprising:
providing a support stone tile;
printing a heating layer on said tile, comprising a plurality of heating tracks;
curing of the pattern and/or carbon film and/or carbon composite material at temperatures comprised between 100 °C and 150 °C, for 10 minutes to 20 minutes;
printing a printed heating layer on said tile, comprising a plurality of distributing tracks; curing of the silver and/or copper and/or aluminum tracks at temperatures comprised between 100 °C and 150 °C, for 10 minutes to 20 minutes;
applying an insulating layer for providing thermal and electrical insulation between the printed heating layer and the ground or wall;
wherein the heating tracks have been printed using a first ink, and the distributing tracks have been printed using a second ink, wherein electrical conductivity of the first ink is lower than electrical conductivity of the second ink;
wherein the printed heating layer has two distributing tracks for each heating track perpendicularly positioned in relation to said two distributing tracks, for forming bus bars by said distributing tracks.
